# EUROPÄISCHE PATENTANMELDUNG

(11) **EP 1 319 846 A1**
(43) Veröffentlichungstag der Anmeldung: **18.06.2003**
(21) Anmeldenummer: 02023327.6
(22) Anmeldetag: 18.10.2002
(51) Int. Cl.: F15B 15/28, G01D 5/20

(54) **Sensorsystem zur Erfassung der Position von beweglichen Hydraulikelementen**

(30) Priorität: 12.12.2001 DE 10160904
(71) Anmelder: Conti Temic microelectronic GmbH, 90411 Nürnberg (DE)
(72) Erfinder: Dürr, Daniel, 88339 Bad Waldsee (DE); Kesenheimer, Ernst, 88263 Horgenzell (DE); Lauter, Harald, 88250 Weingarten (DE); Schäfer, Maik, 88048 Friedrichshafen-Kluftern (DE)

(57) **Zusammenfassung**

1. Sensorsystem zur Erfassung der Position von beweglichen Hydraulikelementen.
2.1 Die Position von beweglichen Hydraulikelementen mit einer innerhalb eines geschlossenen Gehäusekörpers verschiebbaren beweglichen Komponente soll auf einfache Weise mit geringen Kosten, zuverlässig und präzise erfaßt werden.
2.2 Hierzu weist das Sensorsystem einen innerhalb des geschlossenen Gehäusekörpers angeordneten magnetischen Geber und einen mit dem geschlossenen Gehäusekörper verbundenen magnetischen Resonanzsensor auf.
2.3 Sensorsystem zur Erfassung der Position von zur Betätigung des Verdecks eines Kraftfahrzeugs vorgesehenen beweglichen Hydraulikelementen.

## Beschreibung

Zur Realisierung der Bewegung beweglicher mechanischer Teile können Hydrauliksysteme eingesetzt werden, insbesondere bei beweglichen mechanischen Teilen, für deren Bewegung eine hohe Betätigungskraft erforderlich ist und/oder für die nur ein geringes Einbauvolumen zur Verfügung steht. An mit Hydraulikmedium (bsp. Wasser oder Öl) gefüllten Hydraulikleitungen des Hydrauliksystems sind oftmals bewegliche Hydraulikelemente angeschlossen (bsp. Hydraulikzylinder), bei denen sich eine in einem Gehäusekörper befindliche bewegliche Komponente (bsp. ein Kolben) durch Variation der Druckverteilung in den Hydraulikleitungen in die gewünschte Richtung bewegt und damit längs eines bestimmten Verschiebungswegs verschoben wird. Die bewegliche Komponente kann dabei vollständig vom Gehäusekörper umschlossen werden (und ggf. durch eine Dichtung abgedichtet werden), d.h. sie ist von außen nicht zugänglich innerhalb des Gehäusekörpers (im Innenraum des Gehäusekörpers) angeordnet.
Zur Ablaufsteuerung, insbesondere zur Kontrolle und/oder Überwachung der Bewegungsabläufe bei der Bewegung der beweglichen mechanischen Teile, muß deren aktuelle Position und daher auch die aktuelle Position der die Bewegung bewerkstelligenden beweglichen Hydraulikelemente bekannt sein, wobei bei beweglichen Hydraulikelementen mit weitreichenden Bewegungen dementsprechend auch ein großer Verschiebungsweg erfaßt werden muß. Beim Einsatz von Endschaltern in Sensorsystemen zur Erfassung der Position von beweglichen Hydraulikelementen (Endschalter werden beim Erreichen und/oder beim Überfahren einer bestimmten Position durch die beweglichen Hydraulikelemente betätigt und können somit insbesondere die Endposition der beweglichen Hydraulikelemente erfassen) ist jedoch nur eine ungenaue Positionsbestimmung und damit Ablaufsteuerung und/oder Überwachung der Bewegungsabläufe möglich; zudem ist der Einsatz von Endschaltern - insbesondere bei beweglichen Hydraulikelementen mit großen Verschiebungswegen - aufgrund der Vielzahl an erforderlichen Endschaltern mit einem hohen Aufwand, hohen Kosten, einem hohen Platzbedarf (großer Bauraum der Endschalter) und einer hohen Störanfälligkeit verbunden.

Der Erfindung liegt die Aufgabe zugrunde, ein einfaches Sensorsystem zur Erfassung der Position von beweglichen Hydraulikelementen nach dem Oberbegriff des Patentanspruchs 1 mit vorteilhaften Eigenschaften bezüglich des Einsatzbereichs, der Zuverlässigkeit, der Kosten und des Herstellungsaufwands anzugeben.
Diese Aufgabe wird gemäß der Erfindung durch die Merkmale im Kennzeichen des Patentanspruchs 1 gelöst.
Vorteilhafte Ausgestaltungen der Erfindung sind Bestandteil der weiteren Patentansprüche.

Beim vorgestellten Sensorsystem ist zur Erfassung der Position (und damit auch der Bewegung) der beweglichen Hydraulikelemente (insbesondere zur Erfassung der Position und damit auch der Bewegung von Hydraulikzylindern) für jedes bewegliche Hydraulikelement ein im Innenraum innerhalb des geschlossenen Gehäusekörpers angeordneter magnetischer Geber als magnetische Marke in Form eines Dauermagneten und ein im Außenbereich (d.h. nicht im Innenraum) des geschlossenen Gehäusekörpers angeordneter, mit dem geschlossenen Gehäusekörper verbundener magnetischer Resonanzsensor vorgesehen. Bei diesem aus der DE 195 23 373 A1 bekannten magnetischen Resonanzserrsor (dieser besteht-zumindest aus einer von einem Generator mit einer Wechselspannung mit konstanter Amplitude und konstanter Frequenz beaufschlagten Erregerspule und aus einer mit der Erregerspule um einen gemeinsamen Kern koaxial angeordneten, mit einem Kondensator einen Hochfrequenzschwingkreis bildenden Sensorspule) wird die sich bei einer Bewegung eines beweglichen Hydraulikelements aufgrund einer Änderung des Abstands und damit der magnetischen Kopplung zwischen magnetischem Geber und magnetischem Resonanzsensor ändernde magnetische Flussdichte am Ort des magnetischen Resonanzsensors in ein variierendes Ausgangssignal des magnetischen Resonanzsensors als Meßsignal umgesetzt, insbesondere in eine abstandsabhängige Änderung der in der Sensorspule des magnetischen Resonanzsensors induzierten Spannung als Meßsignal. Anhand der Spannungsamplitude der in der Sensorspule des magnetischen Resonanzsensors induzierten Spannung kann die Position des beweglichen Hydraulikelements und damit des durch das bewegliche Hydraulikelement betätigten beweglichen Teils bestimmt werden, wobei auch große Abstände zwischen magnetischem Geber und magnetischem Resonanzsensor und damit große Verschiebungswege des beweglichen Hydraulikelements je nach Eigenschaft des magnetischen Gebers und der Umgebungsbedingungen erfaßt erden können (bsp. kann dieser Abstand bis zu 250 mm betragen).
Der sich im Innenraum innerhalb des geschlossenen Gehäusekörpers des beweglichen Hydraulikelements befindliche magnetische Geber kann hierbei auf der beweglichen Komponente angeordnet sein (bsp. bei einem als Hydraulikzylinder mit einem verschiebbaren beweglichen Kolben ausgebildeten beweglichen Hydraulikelement auf dem Kolben, insbesondere auf dem Kolbenboden oder auf der zur Verschiebung des Kolbens vorgesehenen Kolbenstange angeordnet sein) oder durch Magnetisierung zumindest eines Teilbereichs der zumindest teilweise aus einem ferromagnetischen Material bestehenden beweglichen Komponente gebildet werden (bsp. bei einem als Hydraulikzylinder mit einem verschiebbaren beweglichen Kolben ausgebildeten beweglichen Hydraulikelement durch Magnetisierung des aus einem ferromagnetischen Material bestehenden Kolbens gebildet werden). Der magnetische Resonanzsensor kann in der Wandung des geschlossenen Gehäusekörpers des beweglichen Hydraulikelements oder auf der Außenseite der Wandung des geschlossenen Gehäusekörpers angeordnet sern, bsp. ist er in einer in der Wandung des geschlossenen Gehäusekörpers vorgesehenen Aussparung angeordnet (bsp. bei einem als Hydraulikzylinder ausgebildeten beweglichen Hydraulikelement in einer Aussparung in der Wandung des Zylindermantels als geschlossenem Gehäusekörper angeordnet).

Mit dem vorgestellten Sensorsystem kann vorteilhafterweise mit geringem Platzbedarf insbesondere auch die Position von schwer zugänglichen beweglichen Hydraulikelementen erfaßt werden, wobei aufgrund der hohen Selektivität des Meßsignals (Nutzsignals) gegenüber Störsignalen und der einfachen Abschirmmöglichkeit des Sensorsystems gegenüber Störeinflüssen eine hohe Störsicherheit und Temperaturstabilität und damit eine zuverlässige und präzise Erfassung der Position von beweglichen Hydraulikelementen gegeben ist. Da beim Sensorsystem nur der magnetische Geber bewegt und somit einem erhöhten Verschleiß unterworfen ist (insbesondere aber nicht der ostsbeständig positionierte magnetische Resonanzsensor) kann das Sensorsystem auf einfache Weise und kostengünstig sowie unempfindlich mit hoher Beständigkeit realisiert werden. Weiterhin kann der gesamte Verschiebungsweg bei der Bewegung von beweglichen Hydraulikelementen erfaßt werden, insbesondere auch bei weitreichenden Bewegungen der beweglichen Hydraulikelemente. Vorzugsweise wird das Sensorsystem zur Erfassung der Position von beweglichen Hydraulikelementen bei Kraftfahrzeugen eingesetzt, bsp. zur Erfassung der Position von für die präzise und zuverlässige Betätigung des Verdecks oder des Kofferraumdeckels eines Kraftfahrzeugs vorgesehenen beweglichen Hydraulikelementen.

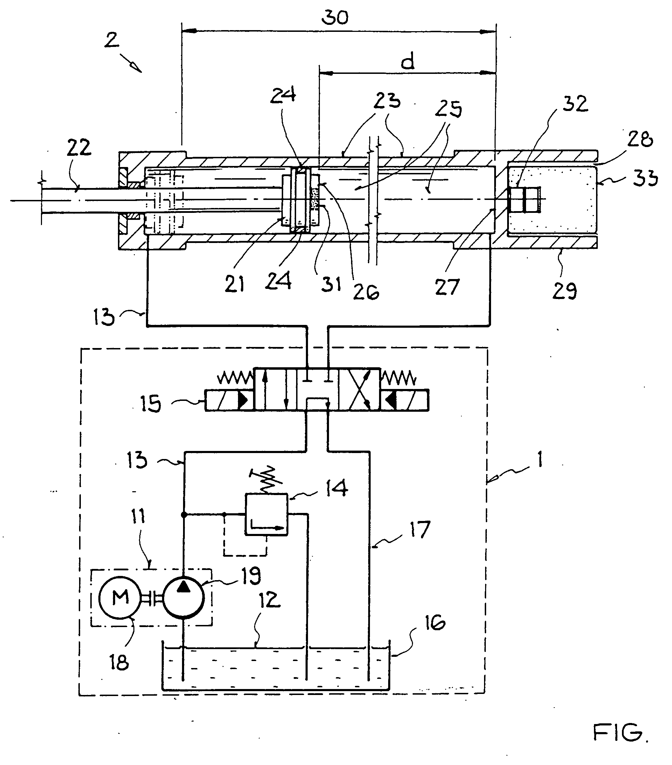

Das Sensorsystem soll im folgenden anhand eines Ausführungsbeispiels beschrieben werden. Hierzu ist in der Figur die schematische Anordnung eines für den Einsatz in einem Hydrauliksystem vorgesehenen Sensorsystems dargestellt.
Das Sensorsystem dient bsp. zur Erfassung der Position bzw. Bewegung von mehreren zur Betätigung des Verdecks eines Kraftfahrzeugs vorgesehenen beweglichen Hydraulikelementen eines Hydrauliksystems. Zur präzisen Ablaufsteuerung bei der Betätigung des Verdecks (bsp. zur Realisierung eines sanften Anlaufs und/oder eines sanften Stopps des Verdecks und/oder einer bestimmten Ablaufgeschwindigkeit bei der Verstellung des Verdecks) werden die Positionen der beweglichen Hydraulikelemente zyklisch ausgewertet, wodurch auch die genaue Position des Verdecks zu jedem Zeitpunkt der Betätigung ermittelt werden kann. Bei Kenntnis der genauen Position des Verdecks und/oder der beweglichen Hydraulikelemente können bei der Ablaufsteuerung unzulässige Ansteuerungen oder Bewegungen erkannt werden sowie (ggf. ungewollte) Bewegungsänderungen des Verdecks und/oder von Hydraulikelementen ermittelt werden.

Gemäß der Figur weist das Hydrauliksystem 1 eine bsp. von einem Elektromotor 18 angetriebene Hydraulikpumpe 19 eines Pumpsystems 11 zur Bereitstellung von Drücken und einer bestimmten Fördermenge an Hydraulikmedium 12 (bsp. Hydrauliköl), Hydraulikleitungen 13 zum Transport des Hydraulikmediums 12 sowie Verteiler 14 (Abzweiger) und Hydraulikventile 15 (Magnetventile) zur gezielten Umleitung des Hydraulikmediums 12 auf. An die Hydraulikleitungen 13 sind bsp. als Hydraulikzylinder ausgebildete bewegliche Hydraulikelemente 2 angeschlossen. Das Hydraulikmedium 12 ist in einem bsp. als Vorratstank ausgebildeten Vorratsbehälter 16 aufbewahrt und wird vom Vorratsbehälter 16 über die Hydraulikpumpe 19 des Pumpsystems 11 und die Hydraulikleitungen 13 an die beweglichen Hydraulikelemente 2 transportiert und von den beweglichen Hydraulikelementen 2 über die Hydraulikleitungen 13 und die Rückleitung 17 wieder dem Vorratsbehälter 16 zugeführt. Beispielsweise sind zur Betätigung des Verdecks des Kraftfahrzeugs sieben Hydraulikzylinder als bewegliche Hydraulikelemente 2 zur Betätigung unterschiedlicher mechanisch beweglicher Teile (Heckdeckel, Kofferraumklappe, Kofferraum etc.) des Kraftfahrzeugs vorgesehen, die durch die Hydraulikventile 15 (Magnetventile) sukzessive angesteuert werden können. Die Hydraulikzylinder 2 weisen bsp. einen Kolben als bewegliche Komponente 21 auf, der über die Kolbenstange 22 in einem über die Dichtungen 24 abgedichteten geschlossenen Zylindermantel als geschlossenen Gehäusekörper 23 entlang des Verschiebungswegs 30 verschiebbar ist (zur Begrenzung des Verschiebungswegs 30 kann bsp. ein Anschlag vorgesehen werden). Zur Ansteuerung der Hydraulikzylinder 2 werden die Hydraulikventile 15 mit elektrischen Signalen (Logiksignalen) beaufschlagt, wodurch die Druckverteilung des Hydraulikmediums 12 am Hydraulikzylinder 2 geändert wird und der Kolben 21 des Hydraulikzylinders 2 somit in die gewünschte Richtung entlang des Verschiebungswegs 30 bewegt wird.
Für jeden Hydraulikzylinder 2 ist ein Sensorsystem zur Erfassung der Position des Kolbens 21 vorgesehen, insbesondere zur Erfassung des Abstands d des Kolbenbodens 26 von der Stirnseite 27 des Zylindermantels 23 und damit zur Erfassung des Verschiebungswegs 30 des Hydraulikzylinders 2. Beim Sensorsystem ist ein als Dauermagnet ausgebildeter magnetischer Geber 31 im Innenraum 25 innerhalb des Zylindermantels 23 bsp. auf dem Kolbenboden 26 des Kolbens 21 angeordnet und ein bsp. auf einer Leiterplatte 33 angeordneter magnetischer Resonanzsensor 32 in einer Aussparung 28 in der Wandung 29 des Zylindermantels 23 integriert (bsp. in eine Bohrung eingebracht), insbesondere in der die Stirnseite 27 des Zylindermantels 23 bildenden Wandung 29. Bei einer Bewegung des Hydraulikzylinders 2 und damit des Kolbens 21 des Hydraulikzylinders 2 ändert sich die magnetische Kopplung zwischen dem magnetischen Geber 31 und einer Sensorspule des magnetischen Resonanzsensors 32, so daß in Abhängigkeit des Abstands d zwischen dem magnetischen Geber 31 und der die Stirnseite 27 des Zylindermantels 23 bildenden Wandung 29 und damit dem magnetischen Resonanzsensor 32 unterschiedliche Spannungswerte als Meßsignal in einer Sensorspule des magnetischen Resonanzsensors 32 induziert werden; d.h. das Ausgangssignal des magnetischen Resonanzsensors 32 (die Ausgangsspannung des magnetischen Resonanzsensors 32) ändert sich in Abhängigkeit des Abstands d zwischen dem magnetischen Geber 31 und der die Stirnseite 27 des Zylindermantels 23 bildenden Wandung 29 und damit dem magnetischen Resonanzsensor 32, folglich aber auch abhängig von der Bewegung der Hydraulikzylinder 2 entlang des Verschiebungswegs 30. Das Ausgangssignal der Sensorspule des magnetischen Resonanzsensors 32 wird durch eine mit der Sensorspule yerbundene Auswerteeinheit oder Steuereinheit des magnetischen Resonanzsensors 32 analog ausgewertet und hieraus die Bewegung der Hydraulikzylinder 2 entlang des jeweiligen Verschiebungswegs 30 ermittelt und damit die Position der Hydraulikzylinder 2 und folglich auch des Verdecks des Kraftfahrzeugs bestimmt. Bsp. variiert die Ausgangsspannung der Sensorspule zwischen 0 V (voll ausgefahrener Zustand des Kolbens 21 und damit des Hydraulikzylinders 2, d.h. maximaler Verschiebungsweg 30 und damit maximaler Abstand d) und der Versorgungsspannung von bsp. 5 V (voll eingefahrener Zustand des Kolbens 21 und damit des Hydraulikzylinders 2, d.h. minimaler Verschiebungsweg 30 und damit minimaler Abstand d).

## Patentansprüche

1. Sensorsystem zur Erfassung der Position von beweglichen Hydraulikelementen (2), bei denen eine bewegliche Komponente (21) innerhalb eines geschlossenen Gehäusekörpers (23) verschiebbar ist,
**dadurch gekennzeichnet,**
**daß** das Sensorsystem einen im Innenraum (25) des geschlossenen Gehäusekörpers (23) des beweglichen Hydraulikelements (2) angeordneten magnetischen Geber (31) und einen mit dem geschlossenen Gehäusekörper (23) verbundenen magnetischen Resonanzsensor (32) aufweist.

2. Sensorsystem nach Anspruch 1, **dadurch gekennzeichnet, daß** der magnetische Resonanzsensor (32) auf der Wandung (29) des geschlossenen Gehäusekörpers (23) angeordnet ist.

3. Sensorsystem nach Anspruch 1 oder 2, **dadurch gekennzeichnet, daß** der magnetische Resonanzsensor (32) auf der nicht an den Innenraum (25) angrenzenden Außenseite der Wandung (29) des geschlossenen Gehäusekörpers (23) angeordnet ist.

4. Sensorsystem nach einem der Ansprüche 1 bis 3, **dadurch gekennzeichnet, daß** der magnetische Resonanzsensor (32) in einer in der Wandung (29) des geschlossenen Gehäusekörpers (23) vorgesehenen Aussparung (28) angeordnet ist.

5. Sensorsystem nach einem der Ansprüche 1 bis 4, **dadurch gekennzeichnet, daß** der magnetische Geber (31) auf der beweglichen Komponente (2-1) des beweglichen Hydraulikelements (2) angeordnet ist.

6. Sensorsystem nach einem der Ansprüche 1 bis 4, **dadurch gekennzeichnet, daß** die bewegliche Komponente (21) oder ein Teilbereich der beweglichen Komponente (21) des beweglichen Hydraulikelements (2) als magnetischer Geber (31) ausgebildet ist.

7. Sensorsystem nach einem der Ansprüche 1 bis 6, **dadurch gekennzeichnet, daß** der magnetische Resonanzsensor (32) zumindest eine von einem Generator mit einer Wechselspannung mit konstanter Amplitude und konstanter Frequenz beaufschlagte Erregerspule und eine mit der Erregerspule um einen gemeinsamen Kern koaxial angeordnete, mit einem Kondensator einen Hochfrequenzschwingkreis bildende Sensorspule aufweist.

8. Sensorsystem nach einem der Ansprüche 1 bis 7, **dadurch gekennzeichnet, daß** das bewegliche Hydraulikelement (2) als Hydraulikzylinder mit einem innerhalb eines geschlossenen Zylindermantels als geschlossenem Gehäusekörper (23) verschiebbaren beweglichen Kolben (21) ausgebildet ist.

9. Sensorsystem nach Anspruch 8, **dadurch gekennzeichnet, daß** der magnetische Resonanzsensor (32) in einer in der Wandung (29) auf der Stirnseite (27) des Zylindermantels (23) vorgesehenen Aussparung (28) angeordnet ist.

10. Sensorsystem nach Anspruch 8 oder 9, **dadurch gekennzeichnet, daß** der magnetische Geber (31) auf der zur Verschiebung des Kolbens (21) vorgesehenen Kolbenstange (22) angeordnet ist.

11. Sensorsystèm nach Anspruch 8 oder 9, **dadurch gekennzeichnet, daß** der magnetische Geber (31) auf dem Kolbenboden (26) des Kolbens (21) angeordnet ist.

12. Sensorsystem nach Anspruch 8 oder 9, **dadurch gekennzeichnet, daß** die zur Verschiebung des Kolbens (21) vorgesehene Kolbenstange (22) als magnetischer Geber (31) ausgebildet ist.

13. Sensorsystem nach Anspruch 8 oder 9, **dadurch gekennzeichnet, daß** der Kolbenboden (26) des Kolbens (21) als magnetischer Geber (31) ausgebildet ist.

14. Sensorsystem nach einem der Ansprüche 1 bis 13 zur Erfassung der Position von zur Betätigung des Verdecks eines Kraftfahrzeugs vorgesehenen beweglichen Hydraulikelementen (2).
